# EUROPEAN PATENT APPLICATION

(11) **EP 4 375 798 A1**
(43) Date of publication of application: **29.05.2024**
(21) Application number: 23817291.0
(22) Date of filing: 11.10.2023
(51) Int. Cl.: G06F 1/16, H04R 1/28, H04R 1/08

(54) **ELECTRONIC DEVICE COMPRISING MIC MODULE**

(30) Priority: 11.10.2022 KR 20220129956; 01.11.2022 KR 20220143633
(71) Applicant: Samsung Electronics Co., Ltd., Suwon-si, Gyeonggi-do 16677 (KR)
(72) Inventor: LEE, Youngmin, Suwon-si, Gyeonggi-do 16677 (KR)
(74) Representative: Arnold & Siedsma
(86) International application number: PCT/KR2023/015642
(87) International publication number: WO 2024/080751

(57) **Abstract**

An electronic device according to an embodiment of the disclosure may include a housing including a front surface on which a display module is disposed, a rear surface opposite to the front surface, and a side surface which surrounds the front surface and the rear surface, a first acoustic hole formed on one side surface of the housing, a printed circuit board disposed in the housing, a slit extending in one direction at one end of the printed circuit board facing the first acoustic hole, and at least partially overlapping with the first acoustic hole when viewing the first acoustic hole from one side surface of the housing, and a microphone module including a microphone hole for receiving an external sound, and disposed on the printed circuit board so that the microphone hole is positioned in the slit. In addition, various embodiments may be also possible.

## Description

### [Technical Field]

Various embodiments of the disclosure relate to an electronic device including a microphone module.

### [Background Art]

A microphone module included in an electronic device is a device which may receive an external sound and convert the same into an electrical signal. The microphone module may be utilized for performing various functions of the electronic device, such as a call function or an external sound recording function.

The microphone module is disposed in the electronic device, and thus a housing which forms an exterior of the electronic device may have a part in which a hole connected to the microphone module is formed, so that the external sound can be guided to the microphone module disposed in the electronic device.

### [Disclosure of Invention]

### [Technical Problem]

An external hole for receiving an external sound may be formed in an exterior of an electronic device. The external hole and a microphone hole of a microphone module disposed in the electronic device may be connected to each other through a channel formed in the electronic device. In an embodiment, the channel may be formed in a mechanism disposed in the electronic device.

Meanwhile, the channel may be formed to be curved in some sections in consideration of arrangement of components in the electronic device. In such a case, a sound introduced into the electronic device through the external hole may be refracted or reflected in the channel formed in the mechanism. Accordingly, not all components can be smoothly introduced into the microphone module due to the refraction and reflection of an original sound generated from the outside, and thus internal processing of electronic equipment is performed using only some components of an original sound during voice recording or a call, whereby microphone acoustic performance experienced by a user may deteriorate.

According to an embodiment of the disclosure, a path through which a sound is transferred to a microphone module is simplified, whereby acoustic performance of the microphone module can be enhanced.

### [Solution to Problem]

An electronic device according to an embodiment of the disclosure may include a housing including a front surface on which a display module is disposed, a rear surface opposite to the front surface, a rear surface which surrounds the front surface and the rear surface, a first acoustic hole formed on one side surface of the housing, a printed circuit board disposed in the housing, a slit extending in one direction at one end of the printed circuit board facing the first acoustic hole, and at least partially overlapping with the first acoustic hole when viewing the first acoustic hole from one side surface of the housing, and a microphone module including a microphone hole for receiving an external sound, and disposed on the printed circuit board so that the microphone hole is positioned in the slit.

An electronic device according to an embodiment of the disclosure may include a housing including a front surface on which a display module is disposed, a rear surface opposite to the front surface, and a side surface which surrounds the front surface and the rear surface, a first acoustic hole formed on one side surface of the housing, a printed circuit board disposed in the housing and including a second acoustic hole, a microphone module including a microphone hole for receiving an external sound, and disposed on the printed circuit board so that the microphone hole is positioned in the second acoustic hole, and a slit extending from one end of the printed circuit board facing the first acoustic hole toward the second acoustic hole, and at least partially overlapping with the first acoustic hole when viewing the first acoustic hole from one side surface of the housing.

An electronic device according to an embodiment of the disclosure may include a housing including a front surface on which a display module is disposed, a rear surface opposite to the front surface, a side surface which surrounds the front surface and the rear surface. In addition, the electronic device may include a first acoustic hole formed on one side surface of the housing. In addition, the electronic device may include a microphone module disposed in the housing and including a microphone hole for receiving an external sound. In addition, the electronic device may include a printed circuit board including a second acoustic hole in which the microphone hole is positioned, and a slit for connecting the first acoustic hole and the second acoustic hole and at least partially overlapping with the first acoustic hole when viewing the first acoustic hole from one side surface of the housing.

### [Advantageous Effects of Invention]

According to an embodiment of the disclosure, a channel for connecting a microphone hole of a microphone module and an external hole formed in the exterior of an electronic device can be linearized to reduce refraction of a sound. Accordingly, a path through which the sound is transferred to the microphone module can be simplified, whereby acoustic performance of the microphone module can be enhanced.

### [Brief Description of Drawings]

With regard to description of drawings, the same or similar reference numerals may be used for the same or similar components.
FIG. 1 is a block diagram illustrating an electronic device in a network environment according to various embodiments.
FIG. 2A is a front perspective view of an electronic device according to an embodiment of the disclosure.
FIG. 2B is a rear perspective view of an electronic device according to an embodiment of the disclosure.
FIG. 3 is an exploded perspective view of the electronic device of FIG. 2A according to an embodiment of the disclosure.
FIG. 4A illustrates a printed circuit board on which a microphone module is disposed according to an embodiment of the disclosure.
FIG. 4B is a cross-sectional view taken along A-A line shown in FIG. 2A, and illustrates a channel structure for connecting a first acoustic hole of a housing and a microphone module disposed on the printed circuit board of FIG. 4A.
FIG. 5A illustrates a printed circuit board of an embodiment different from the printed circuit board of FIG. 4A.
FIG. 5B is a cross-sectional view taken along A-A line shown in FIG. 2A, and illustrates a channel structure for connecting a first acoustic hole of a housing and a microphone module disposed on the printed circuit board of FIG. 5A.
FIG. 6 illustrates a microphone module according to an embodiment of the disclosure.
FIG. 7A illustrates a microphone acoustic performance according to an embodiment of the disclosure, and FIG. 7B illustrates a microphone acoustic performance according to an embodiment of the disclosure.

### [Mode for the Invention]

It should be appreciated that various embodiments of the present disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

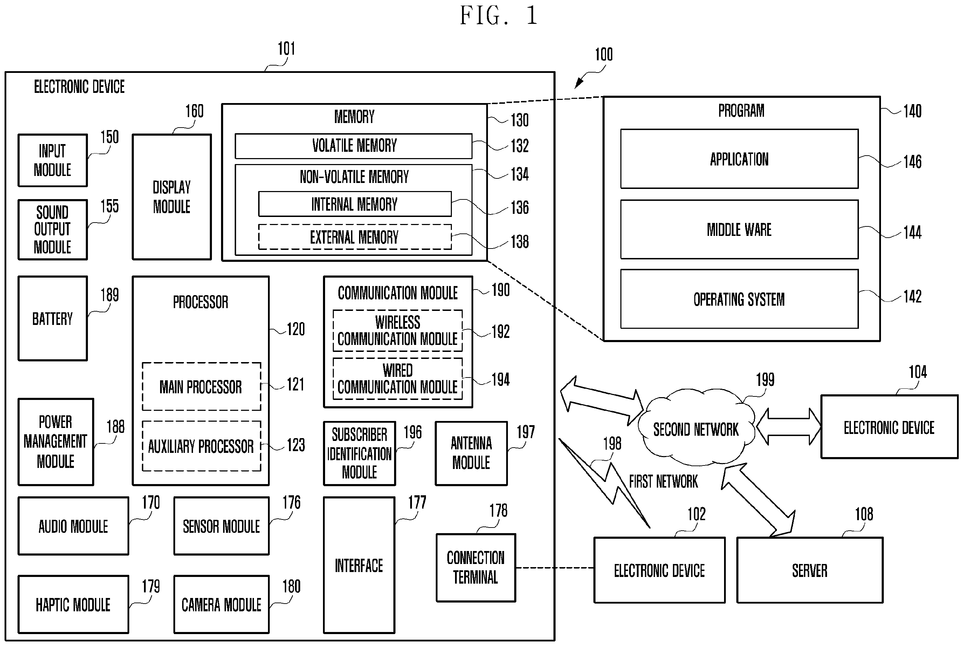

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related there to. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

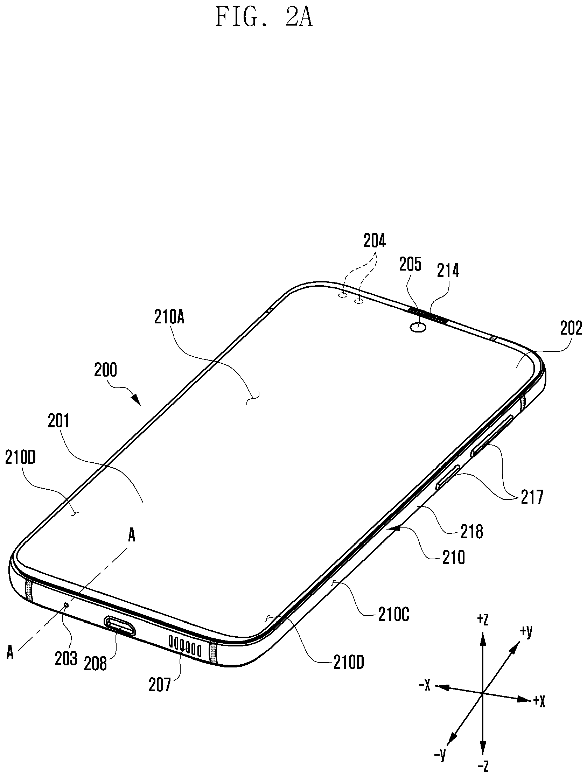

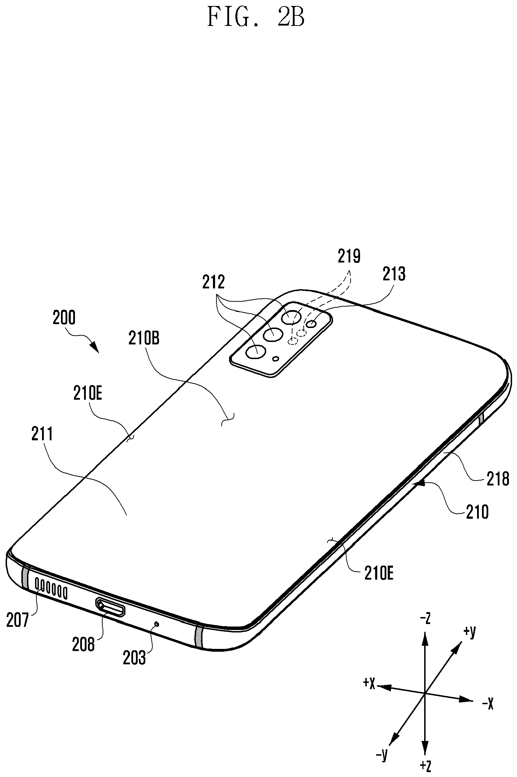

FIG. 2A is a front perspective view of an electronic device according to various embodiments of the disclosure. FIG. 2B is a rear perspective view of the electronic device of FIG. 2A according to various embodiments of the disclosure.

The electronic device 200 to be described below may include at least one of the components of the electronic device 101 described above with reference to FIG. 1.

With reference to FIG. 2A and FIG. 2B, the electronic device 200 according to an embodiment may include a housing 210 that includes a first surface (or front surface) 210A, a second surface (or rear surface) 210B, and a side surface 210C surrounding a space between the first surface 210A and the second surface 210B. In another embodiment (not shown), the housing 210 may refer to a structure forming a part of the first surface 210A, the second surface 210B, and the side surface 210C in FIG. 2A. According to an embodiment, the first surface 210A may be formed by a front plate 202 (e.g., glass plate or polymer plate including various coating layers) whose at least a portion is substantially transparent. The second surface 210B may be formed by a rear plate 211 that is substantially opaque. The rear plate 211 may be formed by, for example, coated or tinted glass, ceramic, polymer, metal (e.g., aluminum, stainless steel (STS), or magnesium), or a combination of at least two thereof. The side surface 210C may be formed by a side bezel structure (or "side member") 218 coupled to the front plate 202 and the rear plate 211 and including a metal and/or a polymer. In a certain embodiment, the rear plate 211 and side bezel structure 218 may be integrally formed and include the same material (e.g., metal material such as aluminum).

In the illustrated embodiment, the front plate 202 may include a first region 210D that is curved and seamlessly extended from the first surface 210A toward the rear plate at opposite ends of the longer edge of the front plate 202. In the illustrated embodiment (see FIG. 2B), the rear plate 211 may include a second region 210E that is curved and seamlessly extended from the second surface 210B toward the front plate 202 respectively at opposite ends of the longer edge. In a certain embodiment, the front plate 202 or the rear plate 211 may include only one of the first region 210D and the second region 210E. In a certain embodiment, the front plate 202 may not include the first region and the second region, but may include only a flat surface disposed parallel to the second surface 210B. In the above embodiments, when the electronic device is viewed from the side thereof, the side bezel structure 218 may have a first thickness (or width) on a side where the first region 210D or the second region 210E is not included, and may have a second thickness thinner than the first thickness on a side where the first region 210D or the second region 210E is included.

According to an embodiment, the electronic device 200 may include at least one or more of display 201, input device 203, sound output devices 207 and 214, sensor modules 204 and 219, camera modules 205 and 212, key input device 217, indicator (not shown), or connector 208. In a certain embodiment, at least one of the elements (e.g., key input device 217 or indicator) may be omitted from the electronic device 200, or another element may be added to the electronic device 200.

The display 201 may be exposed, for example, through a significant portion of the front plate 202. In a certain embodiment, at least a portion of the display 201 may be exposed through the front plate 202 forming the first surface 210A and the first region 210D of the side surface 210C. The display 201 may be coupled to or disposed adjacent to a touch sensing circuit, a pressure sensor capable of measuring the intensity (pressure) of a touch, and/or a digitizer that detects a magnetic field type stylus pen. In a certain embodiment, at least some of the sensor modules 204 and 219, and/or at least some of the key input devices 217 may be disposed on the first region 210D and/or the second region 210E.

The input device 203 may include a microphone 203. In a certain embodiment, the input device 203 may include a plurality of microphones 203 arranged to detect the direction of a sound. The sound output devices 207 and 214 may include speakers 207 and 214. The speakers 207 and 214 may include an external speaker 207 and a call receiver 214. In a certain embodiment, the microphone 203, the speakers 207 and 214, and the connector 208 may be at least partially disposed in the internal space of the electronic device 200, and may be exposed to the external environment through at least one hole formed in the housing 210. In a certain embodiment, the hole formed in the housing 210 may be commonly used for the microphone 203 and the speakers 207 and 214. In a certain embodiment, the sound output devices 207 and 214 may include a speaker (e.g., piezo speaker) that operates in isolation from the hole formed in the housing 210.

The sensor modules 204 and 219 may generate an electrical signal or a data value corresponding to an internal operating state of the electronic device 200 or an external environmental state. The sensor modules 204 and 219 may include, for example, a first sensor module 204 (e.g., proximity sensor) and/or a second sensor module (not shown) (e.g., fingerprint sensor) disposed on the first surface 210A of the housing 210, and/or a third sensor module 219 (e.g., HRM sensor) disposed on the second surface 210B of the housing 210. The fingerprint sensor may be disposed on the first surface 210A (e.g., home key button) of the housing 210, on a portion of the second surface 210B, and/or under the display 201. The electronic device 200 may further include a sensor module which is not shown, for example, at least one of a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, a proximity sensor, or an illuminance sensor.

The camera modules 205 and 212 may include a first camera module 205 disposed on the first surface 210A of the electronic device 200, a second camera module 212 disposed on the second surface 210B, and/or a flash 213. The camera modules 205 and 212 may include one or plural lenses, an image sensor, and/or an image signal processor. The flash 213 may include, for example, a light emitting diode or a xenon lamp. In a certain embodiment, two or more lenses (wide-angle lens, ultra-wide-angle lens, or telephoto lens) and image sensors may be arranged in one surface of the electronic device 200.

The key input devices 217 may be arranged in the side surface 210C of the housing 210. In another embodiment, the electronic device 200 may not include some or all of the above-mentioned key input devices 217, and a key input device 217 not included may be implemented on the display 201 in a different form such as a soft key. In another embodiment, the key input devices 217 may be implemented using a pressure sensor included in the display 201.

The indicator may be disposed on, for example, the first surface 210A of the housing 210. The indicator may provide, for example, state information of the electronic device 200 in a light form (e.g., light emitting element). In another embodiment, the light emitting element may provide a light source interacting with, for example, the operation of the camera module 205. The indicator may include, for example, an LED, an IR LED, and/or a xenon lamp.

The connector holes 208 may include a first connector hole 208 capable of accepting a connector (e.g., universal serial bus (USB) connector) for transmitting and receiving power and/or data to and from an external electronic device, and/or a second connector hole (e.g., earphone jack) (not shown) capable of accepting a connector for transmitting and receiving an audio signal to and from an external electronic device.

Some of the camera modules 205 and 212, some of the sensor modules 204 and 219, or the indicator may be disposed to be exposed through the display 201. For example, the camera module 205, the sensor module 204, or the indicator may be arranged in the internal space of the electronic device 200 so as to be in contact with the external environment through an opening of the display 201 perforated up to the front plate 202 or a transmissive region. According to an embodiment, the region in which the display 201 and the camera module 205 face each other may be formed as a transmissive region having a preset transmittance as a part of the content display area. According to an embodiment, the transmissive region may be formed to have a transmittance in a range of about 5 percent to about 20 percent. This transmissive region may include a region overlapping an effective area (e.g., angle-of-view area) of the camera module 205 through which light passes for image generation with an image formed by an image sensor. For example, the transmissive region of the display 201 may include a region having a lower pixel density than surrounding regions. For example, the transmissive region may replace the opening. For example, the camera module 205 may include an under display camera (UDC). In another embodiment, a certain sensor module 204 may be disposed in the internal space of the electronic device so as to perform its function without being visually exposed through the front plate 202. For example, in this case, the region of the display 201 facing the sensor module may not need a perforated opening.

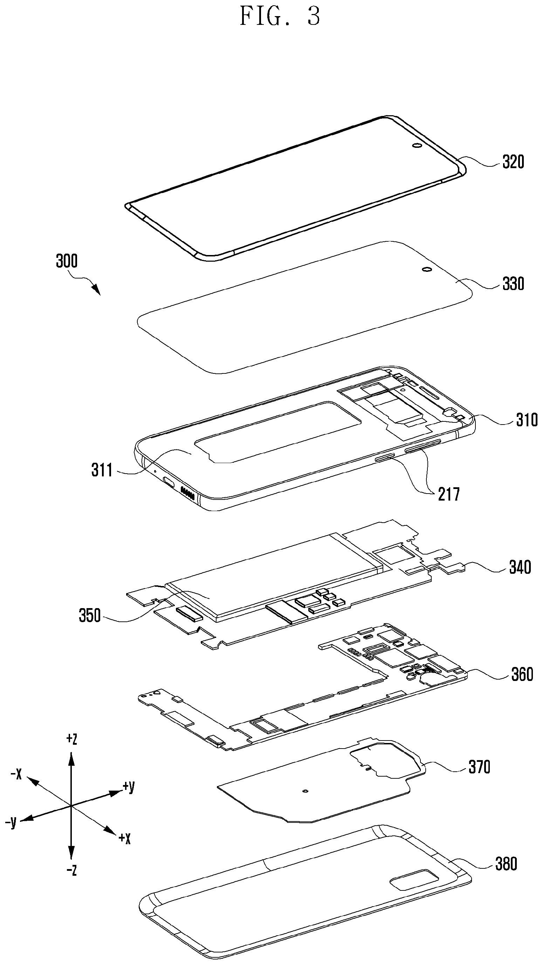

According to various embodiments, an electronic device 200 has a bar type or a plate type exterior, but the disclosure is not limited thereto. For example, the illustrated electronic device 200 may be a part of a foldable electronic device, a slidable electronic device, a stretchable electronic device, and/or a rollable electronic device. The "foldable electronic device", the "slidable electronic device", the "stretchable electronic device", and/or the "rollable electronic device" may mean an electronic device having a bendable display (e.g., the display 330 of FIG. 3) so that at least a part thereof can be folded, wound, or rolled, or an area is at least partially expandable and/or receivable in a housing (e.g., the housing 210 of FIGS. 2A and 2B). The foldable electronic device, the slidable electronic device, the stretchable electronic device, and/or the rollable electronic device may allow, upon the needs of users, the display to be unfolded or a larger area of the display to be exposed, thereby enabling an extended screen display area to be used.

FIG. 3 is an exploded perspective view of an electronic device 200 of FIG. 2A according to various embodiments of the disclosure.

An electronic device 300 of FIG. 3 may be at least partially similar to the electronic device 200 of FIGS. 2A and 2B, or may include another embodiment of an electronic device.

Referring to FIG. 3, an electronic device 300 (e.g., the electronic device 200 of FIG. 2A or FIG. 2B) may include a side surface member 310 (e.g., a side surface bezel structure), a first support member 311 (e.g., a bracket or a support structure), a front surface plate 320 (e.g., a front cover), a display 330 (e.g., the display 201 of FIG. 2A), a substrate 340 (e.g., a printed circuit board (PCB), a flexible PCB (FPCB), or a rigid-flexible PCB (RFPCB)), a battery 350, a second support member 360 (e.g., a rear case), an antenna 370, and a rear surface plate 380 (e.g., a rear surface cover). In an embodiment, the electronic device 300 may omit at least one of the elements (e.g., the first support member 311 or the second support member 360), or may additionally include another element. At least one of the elements of the electronic device 300 may be identical or similar to at least one of the elements of the electronic device 200 of FIG. 2A or FIG. 2B, and a redundant description is omitted below.

The first support member 311 may be disposed inside the electronic device 300 and connected to the side surface member 310, or may be integrally formed with the side surface member 310. The first support member 311 may be formed of, for example, a metal material and/or a non-metal material (e.g., polymer). The first support member 311 may have one surface to which the display 330 is coupled, and the other surface to which the substrate 340 is coupled. The substrate 340 may have a processor (e.g., the processor 120 of FIG. 1), a memory (e.g., the memory 140 of FIG. 1), and/or an interface (e.g., the interface 177 of FIG. 1) mounted thereon. The processor may include, for example, one or more of a central processing unit, an application processor, a graphics processing unit, an image signal processor, a sensor hub processor, and a communication processor.

The memory may include, for example, a volatile memory or a non-volatile memory.

The interface may include, for example, a high-definition multimedia interface (HDMI), a universal serial bus (USB) interface, an SD card interface, and/or an audio interface. For example, the interface may electrically or physically connect the electronic device 300 and an external electronic device, and may include a USB connector, an SD card/MMC connector, or an audio connector.

The battery 350 is a device for supplying power to at least one element of the electronic device 300, and may include, for example, a primary cell which is not rechargeable, a secondary cell which is rechargeable, or a fuel cell. At least a part of the battery 350 may be disposed, for example, to be substantially co-planar with the substrate 340. The battery 350 may be integrally disposed inside the electronic device 300. In another embodiment, the battery 350 may be disposed to be detachable from the electronic device 300.

The antenna 370 may be disposed between the rear surface plate 380 and the battery 350. The antenna 370 may include, for example, a near field communication (NFC) antenna, a wireless charging antenna, and/or a magnetic secure transmission (MST) antenna. The antenna 370 may perform short-distance communication with an external device, or may wirelessly transmit or receive power required for charging thereto/therefrom. In another embodiment, an antenna structure may be formed by a part or a combination of the side surface bezel structure 310 and/or the first support member 311.

Although the electronic device 300 above is described based on a bar-type electronic device, the electronic device 300, in an embodiment, may be a part of a foldable electronic device, a slidable electronic device, a stretchable electronic device, and/or a rollable electronic device.

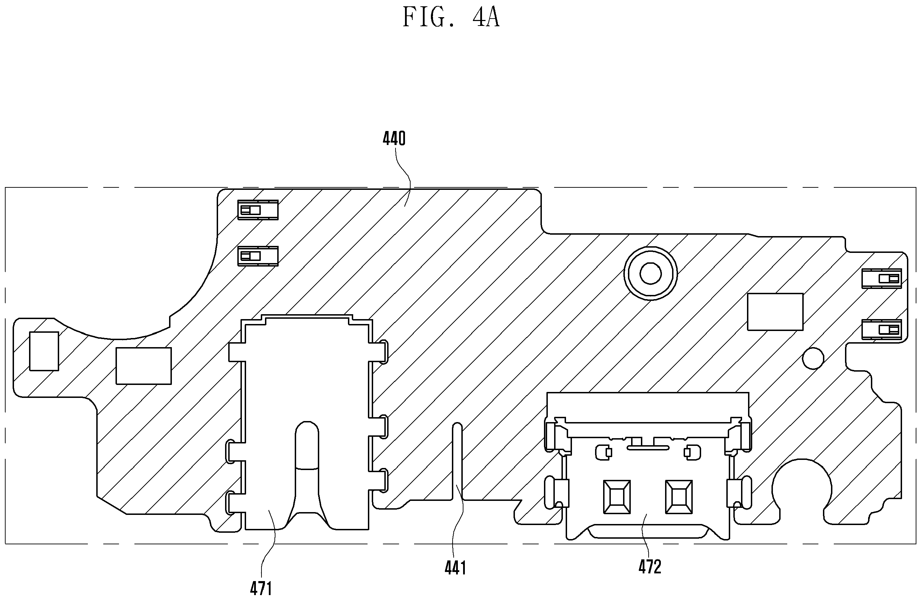

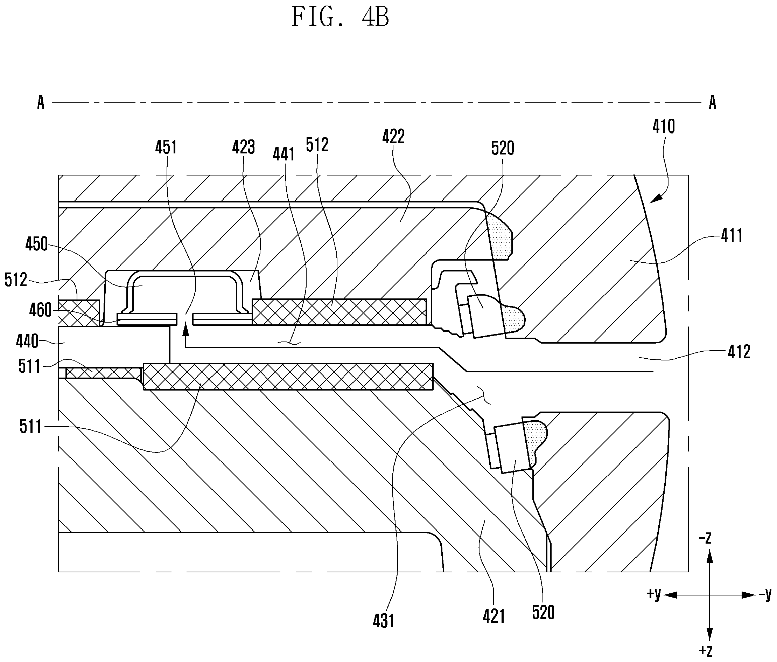

FIG. 4A illustrates a printed circuit board on which a microphone module is disposed according to an embodiment of the disclosure. FIG. 4B is a cross-sectional view taken along A-A line shown in FIG. 2A, and illustrates a channel structure for connecting a first acoustic hole of a housing and a microphone module disposed on the printed circuit board of FIG. 4A.

Hereinafter, the same or similar reference numerals are used to refer to elements identical or similar to the elements described in FIGS. 1, 2A, 2B, and 3 above. In addition, descriptions of the elements identical or similar to the above-described elements are omitted.

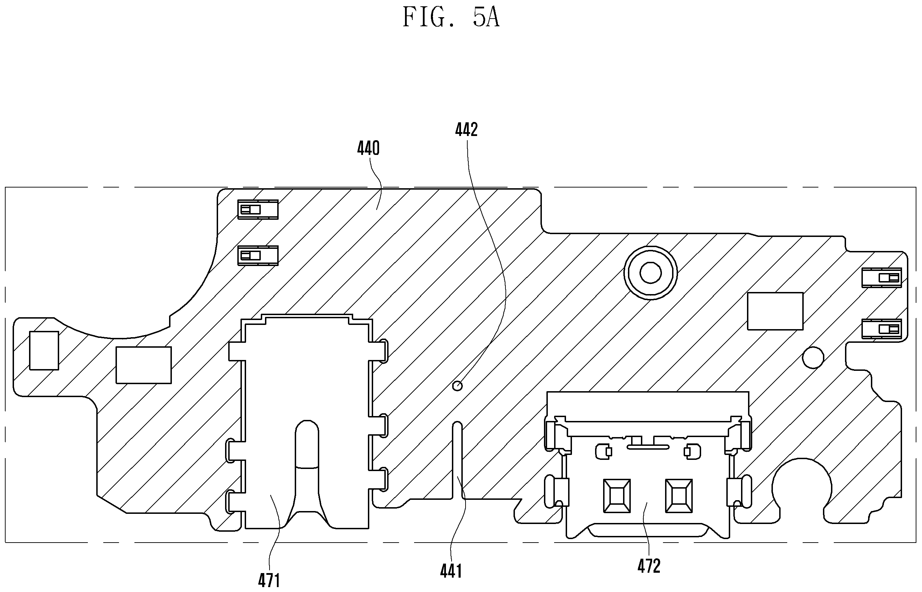

According to an embodiment, a printed circuit board 440 (e.g., the substrate 340 of FIG. 3) may include various connector holes 208 and slits 441. The connector hole 208 may be exposed to an external environment through at least one hole formed in a housing 410 (e.g., e.g., the housing 210 of FIG. 2A). In an embodiment, referring to FIGS. 4A and 5A, the connector hole 208 may be connected to an ear jack 471 connected to an earphone jack, and a charging connector 472 connected to a power supply device. The ear jack 471 and the charging connector 472 may be exposed to an external environment through at least one hole (e.g., the connection hole 208) formed in the housing 410. In addition, various connection holes 208 may be disposed on the printed circuit board 440.

According to an embodiment, referring to FIG. 4A, although not shown, the microphone module 450 may be positioned between the ear jack 471 and the charging connector 472. In such a case, the slit 441 may be positioned between the ear jack 471 and the charging connector 472 so as to be connected to a microphone hole 451 of the microphone module 450. The positions of the microphone module 450 and the slits 441 are merely illustrative, and the microphone module and the slits may be arranged and formed in various positions on the printed circuit board 440.

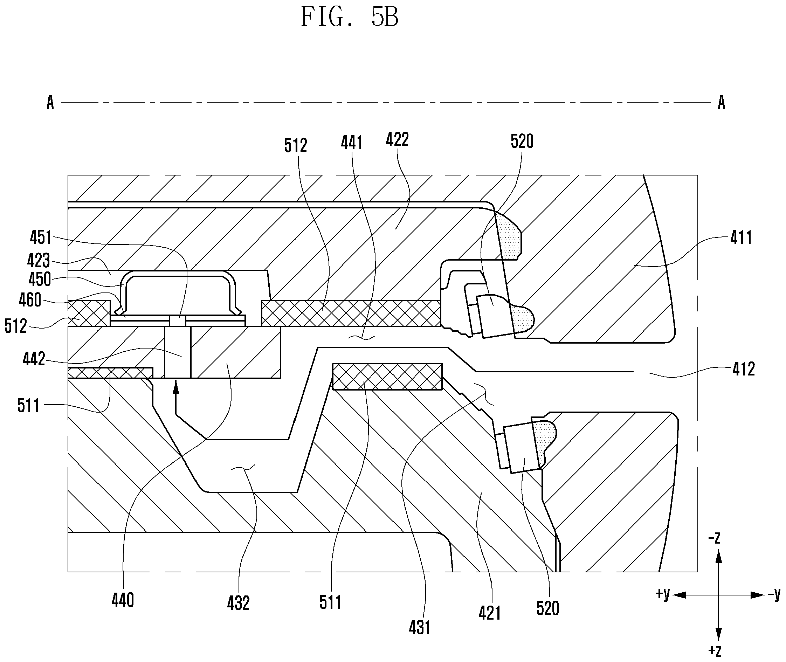

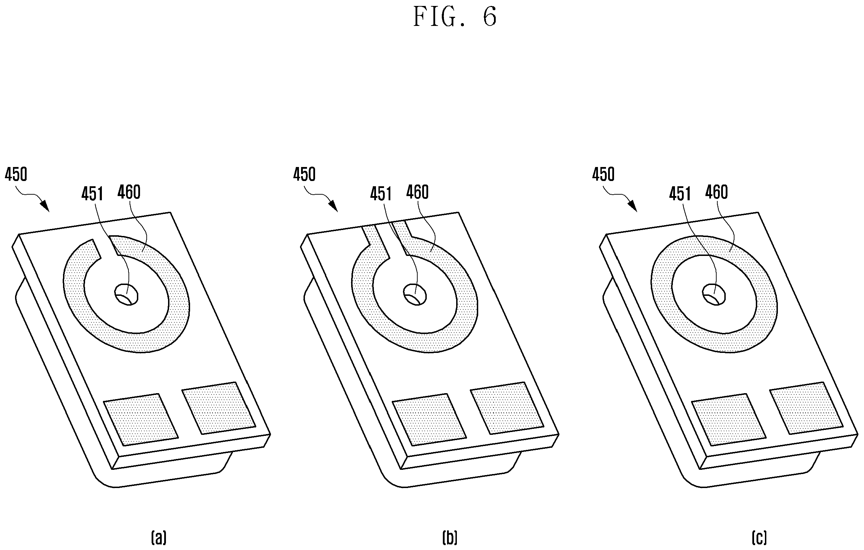

According to an embodiment, various mechanisms may be arranged inside the housing 410. Here, the mechanisms may be used to collectively refer to elements for supporting or fixing various elements included in the electronic device 300 (e.g., the electronic device 101 of FIG. 1 and/or the electronic device 200 of FIG. 2A) at designated positions in the electronic device 300. For example, the mechanisms may include a first support member 421 (e.g., the first support member 311 of FIG. 3 and the first support member 421 of FIGS. 4B and 5B) for supporting the printed circuit board 440, and a second support member 422 (e.g., the second support member 360 of FIG. 3 and a second support member 422 of FIGS. 4B and 6B) covering the printed circuit board 440. In addition, elements such as the microphone module 450 and the display 201 may be fixed or supported through the first support member 421 and/or the second support member 422 disposed inside the housing 410.

According to an embodiment, the housing 410 may be formed of various materials. For example, the housing 410 may be formed of a metal material or a synthetic resin material, or may be formed of a composite material. The housing 410 may have serval segmented parts connected to each other in various ways (e.g., bonding through adhesive, bonding through welding, or coupling through bolt coupling). The above-described shape, material, and forming method of the housing 410 are merely illustrative, and the housing 410 may be changed in various manners within the range in which those skilled in the art can understand. The shape of the housing 410 illustrated in FIGS. 4A and 4B is merely provided as an example, and is not limited to the shape of the housing 410 described in the disclosure.

According to an embodiment, the microphone module 450 may be disposed inside the housing 410. The microphone module 450 is a device for chaining a sound into an electrical signal. For example, when the sound transferred to the microphone module 450 causes a vibration plate (not shown) included in the microphone module 450 to vibrate, an electrical signal may be generated by an element (e.g., a coil (not shown)) which generates the electrical signal in association with the vibration of the vibration plate.

In an embodiment, the microphone module 450 may be disposed on the printed circuit board 440 and disposed at the position adjacent to a first acoustic hole 412 formed in the housing 410. An external sound may be transferred to the microphone module 450 through the first acoustic hole 412. The microphone module 450 may be disposed at the position adjacent to the first acoustic hole 412 so that a phenomenon in which the external sound is lost or a waveform of the sound changes in the process of transferring the external sound to the microphone module 450 can be minimized.

According to an embodiment, the first acoustic hole 412 may be formed in the housing 410. Referring to FIGS. 2A, 2B, 4B, and 5B, the first acoustic hole 412 may be formed on a side surface (e.g., a surface facing the Y-direction with reference to FIG. 2A) of the housing 410 (e.g., the housing 210 of FIG. 2A). In an embodiment, the first acoustic hole 412 may be formed on a frame 411 (e.g., the side surface bezel structure 218 of FIG. 2A and the side surface member 310 of FIG. 3) forming an exterior of the housing 410. In an embodiment, the frame 411 may be formed separately from a body of the housing 410, and may be coupled to a side surface of the housing 410. In an embodiment, the frame 411 may be integrally formed with the housing 410, and may be a part referring to a side surface of the housing 410.

Hereinafter, a channel is described. A "channel (e.g., the slit 411 of FIGS. 4A to 5B)" may mean a passage for guiding transfer of a sound (waveform). For example, the channel may mean a physical space. The channel may include a space filled with a medium (e.g., air) which can transfer the waveform. Hereinafter, when a sound is transferred through the channel, it may mean that the sound is transferred through a specific space. In addition, when an element is connected through the channel, it may mean that a space indicated by the element and a specific space are connected to each other.

According to an embodiment, a channel for connecting the first acoustic hole 412 and the microphone hole 451 of the microphone module 450 may be positioned in the housing 410. In an embodiment, referring to FIGS. 4A, 4B, 5A, and 5B, the printed circuit board 440 may include the slit 441 extending in one direction (e.g., +Y direction with reference to FIG. 4B). In an embodiment, the slit 441 may extend from one end of the printed circuit board 440 facing the first acoustic hole 412 toward the microphone hole 451. In an embodiment, as shown in FIG. 4B, the microphone module 450 may be disposed on the printed circuit board 440 so that the microphone hole 451 is positioned in the slit 441 of the printed circuit board 440. Accordingly, an external sound may be transferred to the microphone hole 451 of the microphone module 450 by sequentially passing through the slit 441 of the printed circuit board 440and the first acoustic hole 412 formed in the frame 411.

In an embodiment, referring to FIG. 4B, the slit 441 may at least partially overlap with the first acoustic hole 412. For example, when viewing one surface (e.g., +Y direction with reference to FIG. 4B) of the housing 410 having the first acoustic hole 412 formed therethrough, the slit 441 may at least partially overlap with the first acoustic hole 412. According to an embodiment of the disclosure, the microphone hole 451 of the microphone module 450 may be connected to the first acoustic hole 412 through the slit 441. The slit 441 may extend from one end of the printed circuit board 440 facing the first acoustic hole 412 toward the microphone hole 451. In addition, when viewing one surface of the housing 410 having the first acoustic hole 412 formed therethrough, the slit 441 may partially overlap with the fist acoustic hole 412. In such a case, an acoustic path from the first acoustic hole 412 to the microphone hole 451 through the slit 441 may be at least partially linearized. Meanwhile, when an external sound is refracted or bent, the degree of the sound transferred to the microphone module 450 may be reduced or distorted. According to an embodiment of the disclosure, in a case of the external sound having passed through the first acoustic hole 412, a phenomenon in which an acoustic path in the housing 410 is refracted or bent can be enhanced compared to a case where the first acoustic hole 412 and the slit 441 do not overlap with each other. In such a case, a path through which the external sound is transferred to the microphone module 450 is simplified, and thus the degree of sound recognition by the microphone module 450 can be enhanced.

According to an embodiment, the slit 441 may form a channel structure for connecting the first acoustic hole 412 and the microphone hole 451 through soundproof members 511 and 512. In an embodiment, referring to FIG. 4B, the soundproof members 511 and 512 may include a first soundproof member 511 disposed on a first surface (e.g., a surface oriented in the +Z direction with reference to FIG. 4B) of the printed circuit board 440 to cover the slit 441. In addition, the soundproof members 511 and 512 may include a second soundproof member 512 disposed on a second surface (e.g., a surface oriented in the -Z direction with reference to FIG. 4B) of the printed circuit board 440 to cover the slit 441. The slit 441 may have a surface opened toward the first surface of the printed circuit board 440, the surface being covered by the first soundproof member 511, and may have a surface opened toward the second surface of the printed circuit board 440, the surface being covered by the second soundproof member 512. Accordingly, the external sound transferred to the slit 441 may not escape around through the first soundproof member 511 and the second soundproof member 512.

In an embodiment, the soundproof members 511 and 512 may be formed of various materials. For example, the soundproof members 511 and 512 may be formed of a material such as rubber, urethane, or silicone. The soundproof members 511 and 512 may shield the slit 441 to prevent the sound introduced into the slit 441 from the first acoustic hole 412 from escaping around. Accordingly, the sound introduced through the first acoustic hole 412 may be transferred to the microphone hole 451 through the slit 441.

According to an embodiment, as shown in FIG. 4B, a first support member 421 for supporting the first surface of the printed circuit board 440 and a second support member 422 for supporting the second surface of the printed circuit board 440 may be arranged in the housing 410. The first support member 421 may support the printed circuit board 440 and/or an electronic component disposed in the housing 410. The second support member 422 may be disposed to face the first support member 421 to support the electronic component and/or the printed circuit board 440 disposed on the first support member 421. In an embodiment, referring to FIG. 4B, the second support member 422 may include a groove 423 for receiving the microphone module 450 disposed on the printed circuit board 440. The microphone module 450 may be positioned in the groove 423 of the second support member 422.

In an embodiment, the first soundproof member 511 may be positioned between the first support member 421 and a first surface (e.g., a surface oriented in the +Z direction with reference to FIG. 4B) of the printed circuit board 440. The second soundproof member 512 may be positioned between the second support member 422 and a second surface (e.g., a surface oriented in the -Z direction with reference to FIG. 4B) of the printed circuit board 440. The first soundproof member 511 may alleviate an impact transferred to the printed circuit board 440 through the first support member 421. Similarly, the second soundproof member 512 may alleviate an impact transferred to the printed circuit board 440 through the second support member 422. Accordingly, the printed circuit board 440 may be protected from an external impact through the first soundproof member 511 and the second soundproof member 512.

According to an embodiment, as shown in FIG. 4B, an acoustic space 431 may be formed between the first support member 421 and the second support member 422. The acoustic space 431 may be a space for connecting the first acoustic hole 412 and the slit 441. In an embodiment, an external sound may be transferred to the microphone hole 451 through the first acoustic shole 412, the acoustic space 431, and the slit 441.

In an embodiment, referring to FIG. 4B, the acoustic space 431 may have an area gradually increasing in the direction (e.g., -Y direction with reference to FIG. 4B) from the slit 441 toward the first acoustic hole 412. Here, the area may mean an area on an xz plane with reference to FIG. 4B. In other words, the acoustic space 431 may have an area gradually decreasing in the direction (e.g., +Y direction with reference to FIG. 4B) from the first acoustic hole 412 toward the slit 441. Accordingly, a sound introduced through the first acoustic hole 412 may be transferred to the microphone hole 451 through the slit 441 without being scattered.

In an embodiment, referring to FIG. 4B, at least one sealing member 520 may be disposed in the acoustic space 431. The sealing member 520 may include a waterproof part and a mesh structure for blocking a foreign material. Accordingly, the sealing member 520 may block an external foreign material and/or solution introduced through the first acoustic hole 412.

The channel structure of the electronic device 300, described above through FIGS. 4A and 4B, is merely provided as an example, and in addition thereto, a microphone channel structure may be changed in various manners.

FIG. 5A illustrates a printed circuit board of an embodiment different from the printed circuit board of FIG. 4A. FIG. 5B is a cross-sectional view taken along A-A line shown in FIG. 2A, and illustrates a channel structure for connecting a first acoustic hole of a housing and a microphone module disposed on the printed circuit board of FIG. 5A.

A channel structure described below may be a channel structure of an embodiment different from the channel structure described in FIGS. 4A and 4B. For elements identical or similar to the elements described in FIGS. 4A and 4B above, the same reference numerals are used unless indicated separately. In addition, descriptions of the elements identical or similar to the above-described elements are omitted.

According to an embodiment, as shown in FIG. 5A, a printed circuit board 440 (e.g., the substrate 340 of FIG. 3) may include a slit 441, a second acoustic hole 442, a connector (e.g., an ear jack 471 and/or a charging connector 472). In an embodiment, a microphone module 450 may be disposed on the printed circuit board 440 so that the microphone hole 451 is positioned in the second acoustic hole 442. The slit 441 may be a path for transferring an external sound introduced through a first acoustic hole 412 of a housing 410 (e.g., the housing 210 of FIG. 2A) to the microphone hole 451. In an embodiment, the microphone module 450 may be positioned between the ear jack 471 and the charging connector 472. In such a case, the slit 441 and the second acoustic hole 442 may be positioned between the ear jack 471 and the charging connector 472 to transfer the external sound from the first acoustic hole 412 to the microphone hole 451. The positions of the microphone module 450 and the slits 441 are merely illustrative, and the microphone module and the slits may be arranged and formed in various positions on the printed circuit board 440.

According to an embodiment, as shown in FIGS. 5A and 5B, the slit 441 may extend from one end of the printed circuit board 440 facing the first acoustic hole 412 toward the second acoustic hole 440. The housing 410 may include an acoustic channel 432 for guiding an external sound introduced into the slit 441 through the first acoustic hole 412 to the second acoustic hole 442. In an embodiment, the acoustic channel 432 may be formed in the housing 410. For example, referring to FIG. 5B, the acoustic channel 432 may be formed in a first support member 421 (e.g., the first support member 311 of FIG. 3). The external sound may be introduced to the microphone hole 451 by passing through the first acoustic hole 412, the acoustic space 431, the slit 441, the acoustic channel 432, and the second acoustic hole 442 which are formed at a side surface of the housing 410. The microphone module 450 may recognize the external sound transferred from the first acoustic hole 412.

In an embodiment, referring to FIG. 5B, the slit 441 may be at least partially overlap with the first acoustic hole 412. For example, when viewing one surface (e.g., +Y direction with reference to FIG. 4B) of the housing 410 having the first acoustic hole 412 formed therethrough, the slit 441 may at least partially overlap with the first acoustic hole 412. In such a case, an acoustic path from the first acoustic hole 412 to the slit 441 may be at least partially linearized. In addition, when viewing one surface (e.g., +Y direction with reference to FIG. 4B) of the housing 410 having the first acoustic hole 412 formed therethrough, the acoustic channel 432 may at least partially overlap with the first acoustic hole 412. In such a case, an acoustic path from the first acoustic hole 412 to the acoustic channel 432 through the slit 441 may be at least partially linearized. Meanwhile, when an external sound is refracted or bent, the degree of the sound transferred to the microphone module 450 may be reduced or distorted. According to an embodiment of the disclosure, in a case of the external sound having passed through the first acoustic hole 412, a phenomenon in which an acoustic path in the housing 410 is refracted or bent can be enhanced compared to a case where the first acoustic hole 412 and the slit 441 do not overlap with each other and/or the first acoustic hole 412 and the acoustic channel 432 do not overlap with each other. A path through which the external sound is transferred to the microphone module 450 is simplified, and thus the degree of sound recognition by the microphone module 450 can be enhanced.

According to an embodiment, the slit 441 may form, through soundproof members 511 and 512, a channel structure for transferring an external sound introduced through the first acoustic hole 412 to the acoustic channel 432. In an embodiment, referring to FIG. 5B, the soundproof members 511 and 512 may include a first soundproof member 511 disposed on a first surface (e.g., a surface oriented in the +Z direction with reference to FIG. 5B) of the printed circuit board 440 to cover the slit 441. The first soundproof member 511 may cover a part of the slit 441 on the first surface of the printed circuit board 440 so that the slit 441 and the acoustic channel 432 can be connected to each other. In addition, the soundproof members 511 and 512 may include a second soundproof member 512 disposed on a second surface (e.g., a surface oriented in the -Z direction with reference to FIG. 5B) of the printed circuit board 440 to cover the slit 441. The slit 441 may have a surface opened toward the first surface of the printed circuit board 440, the surface being at least partially covered by the first soundproof member 511, and may have a surface opened toward the second surface of the printed circuit board 440, the surface being covered by the second soundproof member 512. Accordingly, the external sound transferred to the slit 441 may not escape around through the first soundproof member 511 and the second soundproof member 512.

In an embodiment, the first soundproof member 511 may alleviate an impact transferred to the printed circuit board 440 through the first support member 421. Similarly, the second soundproof member 512 may alleviate an impact transferred to the printed circuit board 440 through the second support member 422. Accordingly, the printed circuit board 440 may be protected from an external impact through the first soundproof member 511 and the second soundproof member 512.

The channel structure of the electronic device 300 (e.g., the electronic device 101 of FIG. 1 and/or the electronic device 200 of FIG. 2A), described above through FIGS. 5A and 5B, is merely provided as an example, and in addition thereto, a microphone channel structure may be changed in various manners.

FIG. 6 illustrates a microphone module according to an embodiment of the disclosure.

According to an embodiment, as shown in FIG. 6, a microphone module 450 may be connected to a printed circuit board 440 (e.g., the substrate 340 of FIG. 3) through a solder ring 460. The solder ring 460 may be positioned between the microphone module 450 and the printed circuit board 440 to surround a microphone hole 451 of the microphone module 450. In an embodiment, parts (a) and (b) of FIG. 6 illustrate a structure of the solder ring 460 in a case where the microphone hole 451 of the microphone module 450 is positioned in the slit 441, as described in FIGS. 4A and 4B. In such a case, the solder ring 460 may surround the slit 441 of the printed circuit board 440 and the microphone hole 451 of the microphone module 450. Accordingly, an external sound having passing through the first acoustic hole 412, the acoustic space 431, and the slit 441 may be transferred to the microphone hole 451 without escaping between the printed circuit board 440 and the microphone module 450. In an embodiment, part (c) of FIG. 6 illustrates a structure of the solder ring 460 in a case where the microphone hole 451 of the microphone module 450 is formed in the second acoustic hole 442 formed on the printed circuit board 440, as described in FIGS. 5A and 5B. In such a case, the solder ring 460 may be positioned between the microphone module 450 and the printed circuit board 440 so as to surround the second acoustic hole 442 and the microphone hole 451 of the microphone module 450. Accordingly, an external sound having passing through the first acoustic hole 412, the acoustic space 431, the slit 441, and the acoustic channel 432 may be transferred to the microphone hole 451 without escaping between the printed circuit board 440 and the microphone module 450.

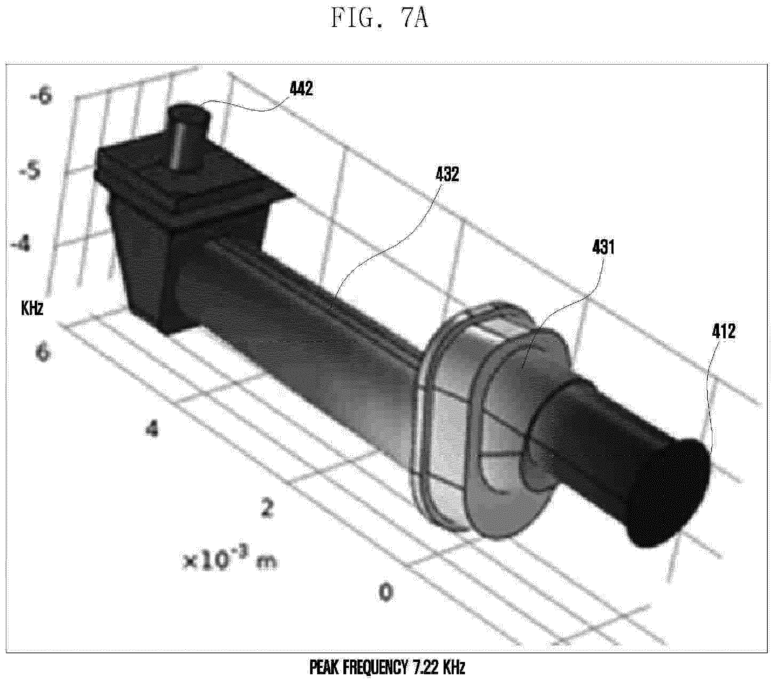

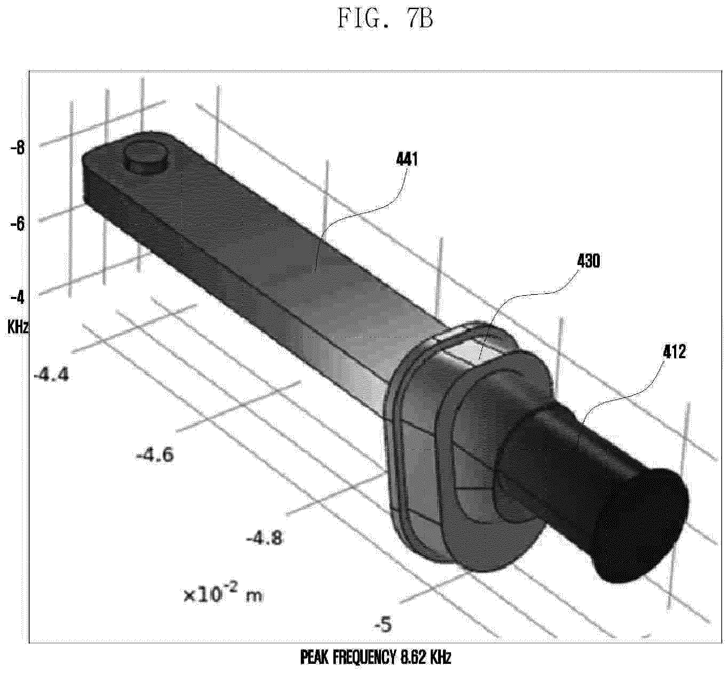

FIG. 7A illustrates a microphone acoustic performance according to an embodiment of the disclosure, and FIG. 7B illustrates a microphone acoustic performance according to an embodiment of the disclosure.

In an embodiment, FIG. 7A illustrates microphone performance of a microphone module 450 disposed on a printed circuit board 440 having no slit 441 formed thereon. In an embodiment, an acoustic path illustrated in FIG. 7A may include the first acoustic hole 412, the acoustic space 431, the acoustic channel 432, and the second acoustic hole 442. For example, an external sound may be transferred to the microphone hole 451 by passing through the first acoustic hole 412, the acoustic space 431, the acoustic channel 432, and the second acoustic hole 442. Meanwhile, when the slit 441 at least partially overlapping the first acoustic hole 412 is not formed on the printed circuit board 440, the acoustic path may be relatively curved compared to a case where the slit 441 is formed on the printed circuit board 440. For example, the acoustic path from the first acoustic hole 412 to the acoustic channel 432 may have a structure that is relatively bent. In such a case, an original sound (e.g., a sound in a high frequency band, which is relatively weak to refraction) generated from the outside is repeatedly refracted and reflected, and thus not all components of the external sound may to be smoothly introduced into the microphone module 450. Accordingly, during voice recording or call, internal processing is performed in the electronic device 300 (e.g., the electronic device 101 of FIG. 1 and/or the electronic device 200 of FIG. 2A) by using only some components of the original sound, and thus microphone acoustic performance experienced by a user may deteriorate.

In an embodiment, FIG. 7B illustrates performance of the microphone module 450 in a case where an acoustic path from the first acoustic hole 412 to the microphone hole 451 through the slit 441 is at least partially linearized, as shown in FIG. 4B. When viewing one surface of the housing 410 (e.g., the housing 210 of FIG. 2A) having the first acoustic hole 412 formed therethrough, the slit 441 may at least partially overlap with the first acoustic hole 412. In such a case, an acoustic path from the first acoustic hole 412 to the microphone hole 451 through the slit 441 may be at least partially linearized. Meanwhile, as described above, when a sound in a high frequency band is refracted or bent, it may be difficult for the sound to be introduced into the microphone module 450. For example, as shown in FIG. 7A, an acoustic path from the first acoustic hole 412 to the second acoustic hole 442 through the acoustic space 431 and the acoustic channel 432 is curved, and thus a sound in a high frequency band may be refracted or bent in the acoustic path. In such a case, not all components of the external sound may be smoothly introduced into the microphone module 450. According to an embodiment of the disclosure, the acoustic path from the first acoustic hole 412 to the microphone hole 451 may be simplified when the slit 441 is formed on the printed circuit board 440, compared to a case where the slit 441 is not formed on the printed circuit board 440. For example, the acoustic path from the first acoustic hole 412 to the microphone hole 451 through the slit 441 may be at least partially linearized, and thus a phenomenon in which the external sound is reflected and/or refracted in the acoustic path can be alleviated. In such a case, the degree of introduction of the sound in the high frequency band into the microphone module 450 can be enhanced. For example, referring to FIG. 7B, it may be identified that as the external sound moves from the first acoustic hole 412 to the microphone hole 451 by passing through the slit 441, a sound pressure in an enhanced microphone peak frequency in the corresponding structure is enhanced, compared to FIG. 7A. For example, the microphone peak frequency in FIG. 7B is 8.62 KHz, which shows enhancement in the frequency, compared to microphone peak frequency 7.22 KHz in FIG. 7A. Accordingly, the acoustic path of FIG. 7B may allow a high-frequency sound to be more smoothly transferred to the microphone module 450, compared to the acoustic path of FIG. 7A. Accordingly, performance that the microphone module 450 obtains a sound having a high frequency component can be enhanced.

An electronic device 300 (e.g., the electronic device 101 of FIG. 1 and/or the electronic device 200 of FIG. 2A) according to an embodiment of the disclosure may include a housing 410 (e.g., the housing 210 of FIG. 2A) including a front surface 210A on which a display module 330 (e.g., the display module 160 of FIG. 1 and/or the display 201 of FIG. 2A) is disposed, a rear surface 210B opposite to the front surface, and a side surface 210C which surrounds the front surface and the rear surface. In addition, the electronic device may include a first acoustic hole 412 (e.g., the input device 203 of FIG. 2A) formed on one side surface of the housing. In addition, the electronic device may include a printed circuit board 440 (e.g., the substrate 340 of FIG. 3) disposed in the housing, a slit 441 extending in one direction at one end of the printed circuit board facing the first acoustic hole, and at least partially overlapping with the first acoustic hole when viewing the first acoustic hole from one side surface of the housing, and a microphone module 450 (e.g., the microphone 230 of FIG. 2A) including a microphone hole 451 for receiving an external sound, and disposed on the printed circuit board so that the microphone hole is positioned in the slit.

In addition, the slit may guide an external sound introduced through the first acoustic hole to the microphone hole

In addition, the electronic device may further include a first soundproof member 411 disposed on a first surface of the printed circuit board to shield the slit, and a second soundproof member 512 disposed on a second surface opposite to the first surface of the printed circuit to shield the slit.

In addition, the housing may include a frame 411 (e.g., the bezel structure 218 of FIG. 2A or the side surface member 310 of FIG. 3) which forms a side exterior of the electronic device and has the first acoustic hole formed therethrough.

In addition, the housing may include a first support member 421 (e.g., the first support member 311 of FIG. 3) on which the printed circuit board is safely mounted, and a second support member 422 (e.g., the second support member 360 of FIG. 3) which includes a groove 423 for receiving the microphone module and covers the printed circuit board.

In addition, the electronic device may further include an acoustic space 431 which is positioned between the first support member and the second support member and connects the first acoustic hole and the slit.

In addition, the acoustic space may have an area gradually decreasing from the first acoustic hole toward the slit.

In addition, the electronic device may further include a sealing member 520 which is disposed in the acoustic space and includes a waterproof part for blocking water and a mesh structure for blocking a foreign material.

In addition, the electronic device may further include a solder ring 460 which is positioned between the microphone module and the printed circuit board and surrounds the microphone hole of the microphone module and the slit of the printed circuit board.

An electronic device 300 (e.g., the electronic device 101 of FIG. 1 and/or the electronic device 200 of FIG. 2A) according to an embodiment of the disclosure may include a housing 410 (e.g., the housing 210 of FIG. 2A) including a front surface 210A on which a display module 330 (e.g., the display module 160 of FIG. 1 and/or the display 201 of FIG. 2A) is disposed, a rear surface 210B opposite to the front surface, and a side surface 210C which surrounds the front surface and the rear surface. In addition, the electronic device may include a first acoustic hole 412 (e.g., the input device 203 of FIG. 2A) formed on one side surface of the housing. In addition, the electronic device may include a printed circuit board 440 (e.g., the substrate 340 of FIG. 3) disposed in the housing and including a second acoustic hole 442. In addition, the electronic device may include a microphone module 450 (e.g., the microphone 230 of FIG. 2A) including a microphone hole 451 for receiving an external sound, and disposed on the printed circuit board so that the microphone hole is positioned in the second acoustic hole. In addition, the electronic device may include a slit 441 extending from one end of the printed circuit board facing the first acoustic hole toward the second acoustic hole, and at least partially overlapping with the first acoustic hole when viewing the first acoustic hole from one side surface of the housing.

In addition, the housing may include an acoustic channel 432 which guides an external sound introduced into the slit of the printed circuit board to the second acoustic hole.

In addition, the electronic device may further include a first support member 421 (e.g., the first support member 311 of FIG. 3) which supports the printed circuit board and has the acoustic channel formed therethrough.

In addition, the electronic device may further include a second support member 422 (e.g., the second support member 360 of FIG. 3) which includes a groove 423 for receiving the microphone module and covers the printed circuit board.

In addition, the electronic device may further include a first soundproof member 511 which is disposed on a first surface of the printed circuit board, the first surface facing the first support member, and covers a part of the slit so that the slit and the acoustic channel are connected, and a second soundproof member 512 which covers a second surface of the printed circuit board, the second surface facing the second support member.

In addition, the acoustic channel may at least partially overlap with the first acoustic hole when viewing one side surface of the housing, on which the first acoustic hole is formed.

In addition, the housing may include a frame 411 (e.g., the bezel structure 218 of FIG. 2A or the side surface member 310 of FIG. 3) which forms a side exterior of the electronic device and has the first acoustic hole formed therethrough.

In addition, the electronic device may include an acoustic space 431 which is positioned between the first support member and the second support member and connects the first acoustic hole and the slit.

In addition, the acoustic space may have an area gradually decreasing from the first acoustic hole toward the slit.

In addition, the electronic device may further include at least one sealing member 520 which is disposed in the acoustic space and includes a waterproof part for blocking water and a mesh structure for blocking a foreign material.

In addition, the electronic device may further include a solder ring 460 which is positioned between the microphone module and the printed circuit board and surrounds the second acoustic hole.

According to an embodiment of the disclosure, a slit 441 for connecting a microphone hole 451 of a microphone module 450 and a first acoustic hole 412 formed in the exterior of an electronic device 300 can be linearized to reduce refraction of a sound. Accordingly, a path through which the sound is transferred to the microphone module 450 can be simplified, whereby acoustic performance of the microphone module 450 can be enhanced.

## Claims

1. An electronic device (101, 200, 300) comprising:
a housing (210, 410) comprising a front surface (210A) on which a display module (160, 201, 330) is disposed, a rear surface (210B) opposite to the front surface, and a side surface (210C) which surrounds the front surface and the rear surface;
a first acoustic hole (203, 412) formed on one side surface of the housing;
a printed circuit board (340, 440) disposed in the housing;
a slit (441) extending in one direction at one end of the printed circuit board facing the first acoustic hole, and at least partially overlapping with the first acoustic hole when viewing the first acoustic hole from one side surface of the housing; and
a microphone module (450) comprising a microphone hole (451) configured to receive an external sound, and disposed on the printed circuit board so that the microphone hole is positioned in the slit.

2. The electronic device of claim 1, further comprising:
a first soundproof member (411) disposed on a first surface of the printed circuit board to shield the slit; and
a second soundproof member (512) disposed on a second surface opposite to the first surface of the printed circuit to shield the slit.

3. The electronic device of claim 1, wherein the housing comprises a first support member (311, 421) on which the printed circuit board is safely mounted, and a second support member (360, 422) which comprises a groove (423) configured to receive the microphone module and covers the printed circuit board.

4. The electronic device of claim 3, further comprising an acoustic space (431) which is positioned between the first support member and the second support member and connects the first acoustic hole and the slit.

5. The electronic device of claim 4, wherein the acoustic space has an area gradually decreasing from the first acoustic hole toward the slit.

6. The electronic device of claim 4, further comprising a sealing member (520) which is disposed in the acoustic space and comprises a waterproof part configured to block water and at least one mesh structure configured to block a foreign material.

7. The electronic device of claim 1, further comprising a solder ring (460) which is positioned between the microphone module and the printed circuit board and surrounds the microphone hole of the microphone module and the slit of the printed circuit board.

8. An electronic device (101, 200, 300) comprising:
a housing (210, 410) comprising a front surface (210A) on which a display module (160, 201, 330) is disposed, a rear surface (210B) opposite to the front surface, and a side surface (210C) which surrounds the front surface and the rear surface;
a first acoustic hole (203, 412) formed on one side surface of the housing;
a printed circuit board (340, 440) disposed in the housing and comprising a second acoustic hole (442);
a microphone module (450) comprising a microphone hole (451) configured to receive an external sound, and disposed on the printed circuit board so that the microphone hole is positioned in the second acoustic hole; and
a slit (441) extending from one end of the printed circuit board facing the first acoustic hole toward the second acoustic hole, and at least partially overlapping with the first acoustic hole when viewing the first acoustic hole from one side surface of the housing.

9. The electronic device of claim 8, wherein the housing comprises an acoustic channel (432) which guides an external sound introduced into the slit of the printed circuit board to the second acoustic hole, and
wherein the acoustic channel at least partially overlaps with the first acoustic hole when viewing one side surface of the housing, on which the first acoustic hole is formed.

10. The electronic device of claim 9, further comprising a first support member (311, 421) which supports the printed circuit board and has the acoustic channel formed therethrough.

11. The electronic device of claim 10, further comprising a second support member (360, 422) which comprises a groove (423) configured to receive the microphone module and covers the printed circuit board.

12. The electronic device of claim 11, further comprising:
a first soundproof member (511) which is disposed on a first surface of the printed circuit board, the first surface facing the first support member, and covers a part of the slit so that the slit and the acoustic channel are connected; and
a second soundproof member (512) which covers a second surface of the printed circuit board, the second surface facing the second support member.

13. The electronic device of claim 11, further comprising an acoustic space (431) which is positioned between the first support member and the second support member and connects the first acoustic hole and the slit.

14. The electronic device of claim 13, wherein the acoustic space has an area gradually decreasing from the first acoustic hole toward the slit.

15. The electronic device of claim 13, further comprising at least one sealing member (520) which is disposed in the acoustic space and comprises a waterproof part configured to block water and a mesh structure configured to block a foreign material.
